# FASCICULE DE BREVET EUROPEEN

(11) **EP 0 243 217 B1**
(45) Date de publication et mention de la délivrance du brevet: **10.02.1993**
(21) Numéro de dépôt: 87400538.2
(22) Date de dépôt: 11.03.1987
(51) Int. Cl.: B01D 39/20, C22B 9/02

(54) **Procédé de préparation d'un filtre pour métaux liquides**
Verfahren zur Herstellung eines Filters für flüssige Metalle
Process of production of a filter for liquid metals

(30) Priorité: 19.03.1986 FR 8603888
(43) Date de publication de la demande: 28.10.1987
(60) Demande divisionnaire: 91116529.8
(73) Titulaire: CERAMIQUES ET COMPOSITES, F-92400 Courbevoie (FR)
(72) Inventeur: Minjolle, Louis, F-65000 Tarbes (FR)
(74) Mandataire: Fabre, Madeleine-France

(56) Documents cités:
- EP-A- 0 107 345
- WO-A-82/03339
- WO-A-84/03056
- US-A- 3 090 094
- US-A- 3 574 646
- A.M. Alper:"High Temperature Oxides", Part IV,"Refractory Glasses, Glass-Ceramics, and Ceramics", ACADEMIC PRESS, New York and London, 1971, pp.71, 185-194

## Description

La présente invention vise un procédé de préparation d'un filtre pour métaux liquides à base de matériau céramique alvéolaire, pour la filtration de métaux ou d'alliages liquides de très haut point de fusion tels que les aciers, la fonte et les alliages métalliques réfractaires.

Il est connu d'utiliser des filtres en céramiques alvéolaires à base de zircone ou d'alumine pour la filtration de métaux ou alliages liquides de très hauts points de fusion.

Ces filtres présentent l'inconvénient d'être trop onéreux et d'être souvent fragiles thermiquement.

Il est connu d'utiliser dans l'industrie automobile des filtres de prix moindre en cordierite ou en mélange cordierite-mullite alvéolaire sous forme de disques ou de mousses; la température d'emploi de tels filtres est cependant limitée à 1500°C environ, ce qui les rend inutilisables pour la filtration des aciers fondus nécessitant une température de 1650°C environ.

Il est connu de par la demande WO-A-8 403 056 d'utiliser des filtres du type billes de réfractaires (corindon) enrobées d'une couche de liant (ZrO₂, SiO₂...) pour filtrer des métaux fondus. Cependant, la résistance aux chocs thermiques de tels filtres, ne permet pas une utilisation correcte au-delà de 1600°C.

Le document "High Temperature Oxides" A.M. ALPER Part IV "Refractory Glasses, Glass-Ceramics and Ceramics" 1971 ACADEMIC PRESS p. 185-194 fait notamment état de compositions réfractaires zircone-alumine-silice qui peuvent être en particulier obtenues par frittage. Toutefois les températures de frittage indiquées ne dépassent pas 1650°C.

La demanderesse a trouvé un nouveau procédé de préparation d'un filtre à base de matériau céramique alvéolaire de prix compétitif, présentant de bonnes propriétés de mouillage par les métaux liquides et de tenue aux chocs thermiques à très haute température, ce qui le rend apte à être utilisé à des températures voisines de 1800°C.

Le procédé selon l'invention concerne la préparation d'un filtre pour métaux liquides à base d'un matériau céramique alvéolaire constitué de 10 à 20% de SiO₂, 50 à 60% de Al₂O₃ et de 20 à 40% de ZrO₂, pourcentages exprimés en poids par rapport au poids total des trois oxydes, Al₂O₃ et SiO₂ étant associés en mullite 3Al₂O₃ 2SiO₂, le poids combiné de zircone et de mullite représentant au moins 90% du poids de matériaux céramique.

Ce procédé est du type dans lequel on réalise un mélange contenant du silicate de zirconium et de l'alumine; on met en forme ledit mélange pour lui donner une structure alvéolaire de porosité frontale ouverte de 50 à 80%; on conforme la matière alvéolaire ainsi obtenue à la configuration désirée du filtre, préalablement ou postérieurement à une opération de cuisson-frittage. Le procédé est caractérisé en ce que le mélange précité contient de 45 à 55% en poids de silicate de zirconium et de 45 à 55% en poids d'alumine, par rapport au poids total des deux composants, et en ce que la température de cuisson-frittage est située entre 1650 et 1750°C.

La transformation chimique du mélange précité de départ (silicate de zirconium-alumine) en mélange d'oxydes SiO₂, Al₂O₃, 2SiO₂ 3Al₂O₃ et ZrO₂ se réalise en cours de frittage.

Le mélange de départ se présente généralement sous forme de particules de l'ordre de 1 à 5µm.

L'opération de mise en forme est réalisée selon des méthodes bien connues, fonction de la structure alvéolaire désirée.

Ainsi, s'il s'agit de préparer des mousses, la méthode la plus classique consiste à préparer une suspension dans l'eau du mélange de départ (barbotine), l'extrait sec étant de l'ordre de 50 à 80%, généralement voisin de 65%, à y tremper une éponge organique à cellules ouvertes de porosité frontale adéquate, à essorer puis à faire cuire à une température de l'ordre de 1650 à 1750°C; le produit obtenu est ensuite découpé à la forme désirée du filtre.

Un mode opératoire du même type est d'ailleurs décrit dans le brevet US-A-3 090 094.

S'il s'agit de préparer un filtre présentant une structure perforée de forme géométrique polygonale, on peut utiliser les procédés d'extrusion bien connus, notamment ceux décrits dans les brevets américains US-A-3,905,743, US-A-3,919,384... visant la réalisation de structures en nids d'abeilles à parois minces d'épaisseur constante, à partir du mélange de départ additionné d'eau et d'adjuvants d'extrusion connus dans la technique.

L'eau est utilisée à raison de 10 à 15% par rapport au mélange de départ.

Parmi les adjuvants classiques d'extrusion, on peut citer :
. les plastifiants tels que des gels ou des colles organiques du type alcool polyvinylique, carboxyméthylcellulose..., utilisés à raison de 0 à 3% par rapport au poids d'oxydes.
. les lubrifiants tels que des graisses, des huiles, des cires... utilisés à raison de 0 à 15% par rapport au poids d'oxydes;

Après l'opération de mise en forme, la matière non cuite obtenue est séchée pour en chasser l'eau libre, à une température de l'ordre de 60°C à 90°C, coupée à la forme et à la dimension désirées du filtre, puis cuite à une température suffisante et pendant une durée suffisante pour donner une céramique frittée.

Cette opération de cuisson et de frittage est de préférence réalisée à une température de 1650 à 1750°C en restant de 15 minutes à 2 heures à cette température.

On peut ainsi obtenir un filtre constitué d'un matériau présentant les caractéristiques suivantes :
. un coefficient de dilatation linéaire inférieur à 6,5 10⁻⁶/°C entre 20 et 1000°C;
. une porosité ouverte de 0 à 30%;
. une densité apparente de l'ordre de 2,6 à 3,8.

De telles caractéristiques rendent le filtre particulièrement apte à la filtration de métaux ou d'alliages métalliques liquides de très haut point de fusion, notamment pour la filtration de métaux ou alliages tels que l'acier dont la coulée s'effectue vers 1650°C, et voire même jusqu'à 1800°C.

Ledit filtre se présente sous la forme classique des filtres en céramiques alvéolaires, par exemple sous forme de plaques carrées, de disques... dont les dimensions sont fonction de la quantité de métal ou d'alliage à filtrer par unité de temps et de la capacité de la boîte de filtration dans laquelle il est disposé; l'épaisseur dudit filtre est généralement de l'ordre de 5 à 15 mm.

Lorsque celui-ci présente une structure perforée de forme géométrique polygonale, il peut, par exemple, contenir de 35 à 50 canaux au cm² présentant une section carrée de 1 à 5 mm de côté.

La filtration des métaux ou alliages liquides à l'aide du filtre faisant l'objet de l'invention est effectuée selon des méthodes connues; elle permet de retenir les impuretés grossières mécaniquement et les inclusions non métalliques (oxydes, carbures, nitrures, halogénures...) physiquement par adsorption dans le réseau cellulaire du filtre même si la dimension desdites inclusions est inférieure à celle des pores dudit filtre.

Les exemples suivants sont donnés à titre indicatif et ne peuvent être considérés comme une limite du domaine et de l'esprit de l'invention.

### EXEMPLE

On prépare une formule constituée de :
- 38,3% en poids de silicate de zirconium (zircon)
- 38,3% en poids d'alumine
- 8,1% en poids de vaseline technique 910
- 1,4% en poids d'alcool polyvinylique RHODOVIOL PS 125
- 13,9% en poids d'eau.

Cette formule est empâtée dans un malaxeur classique de l'industrie céramique (par exemple du type pétrin, malaxeur muni de bras en Z ou malaxeur à meules).

La charge ainsi obtenue est extrudée sous une pression d'environ 200 bars avec une vitesse de 5 cm/s à l'aide d'une boudineuse ou d'une presse à vis munie d'une matrice d'extrusion pour structure en nids d'abeilles comportant des fentes de décharge interconnectées uniformément séparées, formant à la sortie une grille de forme carrée de 51 mm de côté comportant des mailles carrées de 1,5 mm de côté et espacées de 0,34 mm.

La structure uniforme résultante est ensuite séchée à une température de 90°C.

La structure séchée ayant pris du retrait est ensuite découpée, sous forme de parallélépipèdes de base carrée de 49 mm de côté et de hauteur égale à 11 mm puis cuite dans un four à gaz à 1700°C pendant 2 heures.

Le filtre obtenu présente les propriétés et les caractéristiques suivantes :

| Propriétés chimiques du matériau : | | |
|---|---|---|
| - composition minéralogique | ZrO₂ | 30% |
| | mullite | 70% |
| - composition chimique | ZrO₂ + impuretés de HfO₂ | 30,5% |
| | Al₂O₃ | 52% |
| | SiO₂ | 17% |
| | autres oxydes | 0,5% |

| Propriétés physiques du matériau : | |
|---|---|
| - densité apparente | 3,23 |
| - porosité ouverte | 15% |
| - coefficient de dilatation linéaire entre 20 et 1000°C | 6 10⁻⁶/°C |

| Caractéristiques du filtre : | |
|---|---|
| - encombrement | 44,5 x 44,5 mm x mm |
| - épaisseur | 10 mm |
| - épaisseur des parois | 0,3 mm |
| - section de passage des canaux | 1,3 x 1,3 mm x mm |
| - section de passage du filtre | 14 cm² |
| - nombre de canaux au cm² | 39 |
| - porosité frontale ouverte | 66% |

Ces propriétés et caractéristiques permettent l'utilisation dudit filtre pour la filtration de fonte à graphite sphéroïdal utilisée pour la fabrication de culasses pour moteurs Diesel.

## Revendications

1. Procédé de préparation d'un filtre pour métaux liquides à base d'un matériau céramique alvéolaire constitué de 10 à 20% de SiO₂, 50 à 60% de Al₂O₃ et de 20 à 40% de ZrO₂, pourcentages exprimés en poids par rapport au poids total des trois oxydes, Al₂O₃ et SiO₂ étant associés en mullite 3Al₂O₃ 2SiO₂, le poids combiné de zircone et de mullite représentant au moins 90% du poids du matériau céramique; procédé du type dans lequel on réalise un mélange contenant du silicate de zirconium et de l'alumine; on met en forme ledit mélange pour lui donner une structure alvéolaire de porosité frontale ouverte de 50 à 80%, on conforme la matière alvéolaire ainsi obtenue à la configuration désirée du filtre, préalablement ou postérieurement à une opération de cuisson-frittage; procédé caractérisé en ce que le mélange précité contient de 45 à 55% en poids de silicate de zirconium, et de 45 à 55% en poids d'alumine par rapport au poids total des deux composants, et en ce que la température de cuisson-frittage est située entre 1650 et 1750°C.

2. Procédé selon la revendication 1, caractérisé en ce que le mélange précité contient 50 ± 1% en poids d'alumine et 50 ± 1% en poids de silicate de zirconium.

3. Procédé selon la revendication 1 ou 2, caractérisé en ce que l'opération de mise en forme est réalisée à l'aide d'un dispositif d'extrusion pour structures perforées.

4. Procédé selon la revendication 3, caractérisé en ce que ledit dispositif est un dispositif d'extrusion pour structures en nids d'abeilles.

5. Procédé selon la revendication 3 ou 4, caractérisé en ce que l'opération de mise en conformité de la matière alvéolaire avec la configuration désirée du filtre est réalisée par découpe préalablement à l'opération de cuisson-frittage.

6. Procédé selon la revendication 1 ou 2, caractérisé en ce que l'opération de mise en forme est réalisée par imprégnation d'une éponge organique à cellules ouvertes par le mélange précité, et en ce que la mise en conformité de la matière alvéolaire avec la configuration désirée du filtre est réalisée par découpe postérieurement à l'opération de cuisson-frittage.

## Claims

1. A process for the preparation of a filter for liquid metals based on a cellular ceramic material formed by from 10 to 20% of SiO₂, from 50 to 60% of Al₂O₃ and from 20 to 40% of ZrO₂, the percentages being expressed by weight with respect to the total weight of the three oxides, Al₂O₃ and SiO₂ being associated as mullite 3Al₂O₃ 2SiO₂, the combined weight of zirconia and mullite representing at least 90% of the weight of the ceramic material; the process being of the type in which a mixture is produced which contains zirconium silicate and alumina; said mixture is shaped to impart thereto a cellular structure of open frontal porosity of from 50 to 80%, and the cellular material which is obtained in that way is put into the desired configuration of the filter prior to or subsequently to a firing-sintering operation; the process being characterised in that said mixture contains from 45 to 55% by weight of zirconium silicate and from 45 to 55% by weight of alumina with respect to the total weight of the two components, and that the firing-sintering temperature is between 1650 and 1750°C.

2. A process according to claim 1 characterised in that said mixture contains 50 ± 1% by weight of alumina and 50 ± 1% by weight of zirconium silicate.

3. A process according to claim 1 or claim 2 characterised in that the shaping operation is carried out by means of an extrusion apparatus for perforated structures.

4. A process according to claim 3 characterised in that said apparatus is an extrusion apparatus for honeycomb structures.

5. A process according to claim 3 or claim 4 characterised in that the operation for putting the cellular material into the desired configuration of the filter is effected by a cutting-out operation prior to the firing-sintering operation.

6. A process according to claim 1 or claim 2 characterised in that the shaping operation is effected by impregnation of an organic sponge with open cells, with said mixture, and that the operation of putting the cellular material into the desired configuration of the filter is effected by a cutting-out operation subsequently to the firing-sintering operation.

## Patentansprüche

1. Verfahren zur Herstellung eines Filters für flüssige Metalle auf der Basis eines wabenförmigen keramischen Materials, das aus 10 bis 20% SiO₂, 50 bis 60% Al₂O₃ und 20 bis 40% ZrO₂ besteht, wobei die Prozentangaben als Gewichtsprozente bezüglich der Gesamtmasse der drei Oxide zu verstehen sind, Al₂O₃ und SiO₂ als Mullit 3Al₂O₃ * 2SiO₂ vorliegen und die Massenanteile des Zirkoniumdioxids und des Mullits zusammen mindestens 90% der Gesamtmasse des keramischen Materials betragen; Verfahren derart, daß eine Mischung aus Zirkoniumsilikat und Tonerde hergestellt wird, die besagte Mischung so geformt wird, daß eine wabenförmige Struktur entsteht, welche eine zu 50 bis 80% geöffnete, poröse Stirnseite besitzt, und das so erhaltene wabenförmige Material vor oder nach einem Brenn- und Sintervorgang an die gewünschte Form des Filters angepaßt wird; Verfahren, dadurch gekennzeichnet, daß die genannte Mischung 45 bis 55 Gewichtsprozent Zirkoniumsilikat und 45 bis 55 Gewichtsprozent Tonerde, bezogen auf die Gesamtmasse der beiden Komponenten, enthält und daß die Brenn- und Sintertemperatur zwischen 1650 und 1750°C liegt.

2. Verfahren nach Anspruch 1, dadurch gekennzeichnet, daß die genannte Mischung 50±1 Gewichtsprozent Tonerde und 50±1 Gewichtsprozent Zirkoniumsilikat enthält.

3. Verfahren nach Anspruch 1 oder 2, dadurch gekennzeichnet, daß der Arbeitsgang der Formgebung mit Hilfe einer Extrusionsapparatur für perforierte Strukturen durchgeführt wird.

4. Verfahren nach Anspruch 3, dadurch gekennzeichnet, daß besagte Apparatur ein Extruder für bienenwabenförmige Strukturen ist.

5. Verfahren nach Anspruch 3 oder 4, dadurch gekennzeichnet, daß der Arbeitsgang, in dem das wabenförmige Material an die gewünschte Gestalt des Filters angepaßt wird, vor dem Brenn- und Sintervorgang durch Zuschneiden geschieht.

6. Verfahren nach Anspruch 1 oder 2, dadurch gekennzeichnet, daß der Arbeitsgang der Formgebung durch Sättigen eines organischen Schwammes mit der genannten Mischung geschieht und daß das Anpassen des wabenförmigen Materials an die gewünschte Gestalt des Filters durch Zuschneiden nach dem Brenn- und Sintervorgang geschieht.
